# EUROPEAN PATENT SPECIFICATION

(11) **EP 0 576 387 B1**
(45) Date of publication and mention of the grant of the patent: **12.08.1998**
(21) Application number: 93500090.1
(22) Date of filing: 21.06.1993
(51) Int. Cl.: F16C 1/26

(54) **Cable sheath terminal for motor vehicles**
Kabelhüllenendstück für Kraftfahrzeug
Extrémité de gaine de cable pour véhicule automobile

(30) Priority: 24.06.1992 ES 9201317
(43) Date of publication of application: 29.12.1993
(73) Proprietor: FICO CABLES, S.A., E-08191 Rubi, Barcelona (ES)
(72) Inventor: Gabas Cebollero, Carlos, E-08024 Barcelona (ES)
(74) Representative: De Verdonces Llargués, Enrique

(56) References cited:
- GB-A- 1 052 159
- GB-A- 1 277 418
- US-A- 2 869 905
- US-A- 4 131 379
- US-A- 4 773 280

## Description

### Field of the Invention

The present invention relates to a cable sheath terminal for motor vehicles. The sheath terminal of the invention is, generally speaking, applicable to sheathed control cables for control and adjustment of very many types of mechanisms used in the industry. To be precise, the sheath terminal of the invention is applicable to the sheathed cable connecting the handbrake mechanism to the corresponding operating lever disposed in the vehicle passenger compartment.

### Background of the Invention

As is known, the handbrake mechanism included in motor vehicles generally comprises, in essence, brake mechanisms which act upon the rear wheel brake shoes or calipers and a compensation mechanism arranged between the said brake mechanisms and the handbrake operating lever. The purpose of the compensating mechanism is to prevent asymmetrical operation of the brake mechanisms and it is permanently automatically operative.

The compensation mechanism and the handbrake operating lever are generally connected together by way of a sheathed steel cable which is attached, at one end, to the compensation mechanism and, at the other end, to the operating lever.

The end of the steel cable attached to the handbrake operating lever has to pass through the sheet metal which, acting as a wall or floor, bounds the automobile passenger compartment. The steel cable passes through the sheet metal by way of a through hole provided for such purpose, the sheath covering the cable being retained on the outside of said passage, by a terminal which, attached to the sheet metal by such hole, allows the steel cable to pass therethrough. In this way the cable can slide freely when moved by the handbrake operating lever.

Generally speaking, these retaining terminals are widely used in all cases where the corresponding end of the sheath of the steel cable must be retained on one side of a metal sheet or, in general, on one side of a partition, while the steel cable as such, i.e., without its sheath, passes through said partition wall. This happens, for example, with the support plate for the brake mechanism of motor vehicles where the corresponding end of the steel cable sheath is retained by a pertinent terminal.

The known embodiments of steel cable sheath retaining terminals like those described in the foregoing paragraphs comprise, generally speaking, a retaining body member, which positions the corresponding sheath end, a check bushing which fixes the position occupied by the retaining body member in the pertinent hole made in the partition wall. The retaining terminal is mounted in such a way that the partition wall is compressed between the retaining body member and the check bushing.

US-A-2869905 discloses a fitting for flexible conduits, as utilized in Bowden wire mechanisms. The device comprises three pieces which have to be mounted together: a cylindrical portion made from elastic material, a collar placed over that cylindrical portion and a conical spring washer to render the fitting tight.

These known retaining terminal embodiments suffer, in general, from the main drawback that they are formed by a plurality of costly to make and assemble component parts, all of which makes the cost of the finished product and the corresponding assembly cost in the motor vehicle more expensive.

### Summary of the Invention

With a view to providing a new terminal embodiment solving the problems of known retaining terminal embodiments described above, consisting basically of their high cost, a cable sheath terminal of new structure for motor vehicles is disclosed.

The cable sheath terminal of the invention comprises a basically cylindrical retaining body member formed by:
- externally, a plurality of support projections of relatively low height and which are evenly spaced apart, defining a theoretical transverse plane, and a plurality of check tabs, arranged in such a way as to be facing said support projections and which are of relatively low height and are slightly inclined in such a way that the free ends thereof are directed towards said support projections, defining another theoretical transverse plane;
- and, internally, a plurality of retaining lugs defining a theoretical transverse plane and a narrowing through which the unsheathed steel cable may be slid, said retaining lugs acting as stop members to prevent the sheath of the steel cable from crossing through the whole of the interior of the retaining body member. The retaining body member is a one-piece member and said support projections and check tabs define, at an intermediate portion of the retaining body member, a housing dimensioned in such a way that, once the retaining body member is engaged in a corresponding partition through a through hole formed therein for that purpose, by resilient deformation of the check tabs, the said partition is compressed between the support projections and the check tabs.

The device is characterized in that the theoretical transverse plane defined by the plurality of retaining lugs is coincident with the theoretical transverse plane formed by the support projections.

The features of the cable sheath terminal for the motor vehicles of the invention, described in the immediately foregoing paragraph, are determinative as far as the production costs and costs of installation in the automobile are concerned. These costs are lower than those of known retaining terminals for this purpose. In fact, the reduction of costs over the known sheath terminal embodiments is achieved, on the one hand, because the terminal of the invention comprises a single retaining body member which extraordinarily simplifies the assembly process in the automobile and, on the other hand, because the retaining body member is a one-piece member and is prepared, preferably, from sheet metal and shaped using low cost mechanical operations.

### Brief Description of the Drawing

The cable sheath terminal for motor vehicles of the invention is illustrated in the sheet of drawings which accompany the description. In the drawings:

Figure 1 is a part cross section view of the terminal of the invention, engaged in a partition wall.

Figure 2 is a cross section view showing the engagement of the terminal of the invention in a partition wall.

Figure 3 is a front view of the retaining body member of the terminal of the invention.

Figure 4 is a rear view of the retaining body member of the invention.

Figure 5 is a cross section view on the line V-V of Figure 2.

Figure 6 is a cross section view on the line VI-VI of Figure 2.

Figure 7 is a cross section view on the line VII-VII of Figure 2.

### Detailed Description of the Embodiment

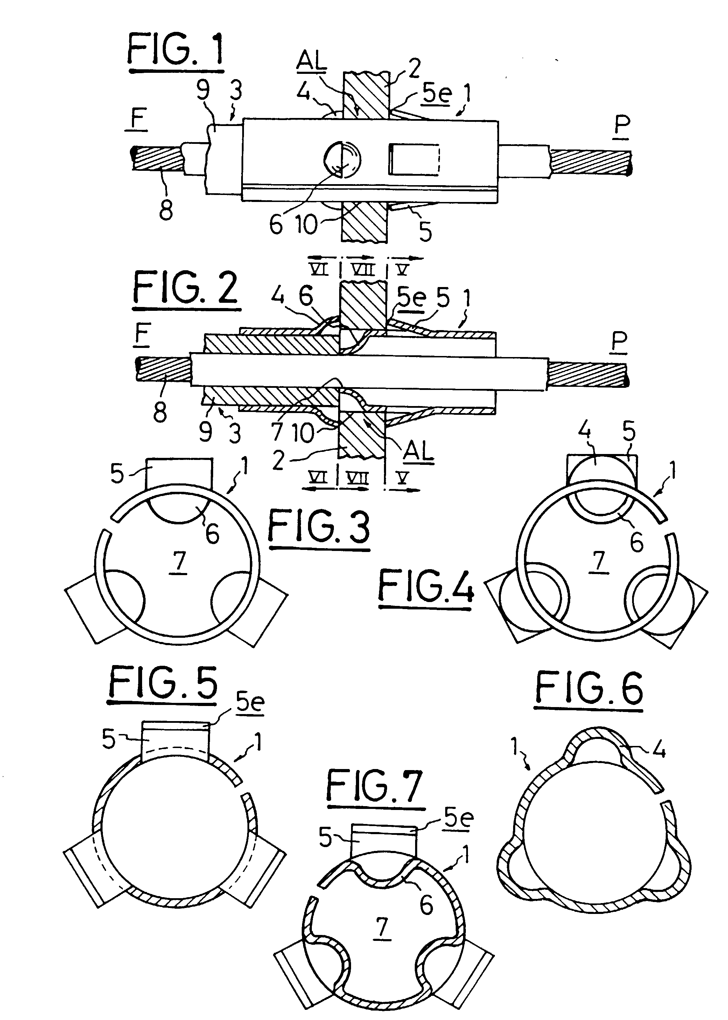

The cable sheath terminal for motor vehicles of the invention described as an example comprises, as shown in Figures 1 and 2 of the drawing sheets, the retaining body member 1 which is a one-piece member and is made, preferably, from a highly resilient sheet steel with a basically quadrangular section. The steel sheet is formed until the shape illustrated in the drawings is obtained.

Figures 1 and 2 show how the retaining body member 1 is engaged in the partition 2 which, as an example of the terminal of the invention, is precisely the metal sheet defining the motor vehicle passenger compartment. In said Figures 1 and 2, the sheathed metal cable 3, which is shown in part, is connected at the end P thereof to the handbrake lever and, at the other end F to the corresponding brake mechanism. For greater clarity of disclosure, the said brake lever and brake mechanism have not been shown in the drawings.

Figures 1 and 2 show how the retaining body member 1 is essentially cylindrical and is formed, on the outside thereof, with three support projections 4 and three check tabs 5 and, on the inside thereof, with three retaining lugs 6.

The number and layout of the support projections 4, check tabs 5 and retaining lugs 6 contemplated in this example of embodiment of the retaining body member 1, are given only as a guidance since, obviously, they will depend on the needs of each particular application.

Figures 1, 2, 4 and 6 show how the support projections 4 extend radially outwards in a relatively short distance from the outer surface of the retaining body member 1 and are equidistantly spaced apart so that the distance between support projections 4 is constant and they define a theoretical plane transverse to the retaining body member 1.

Figures 1 to 5 and 7 show how the check tabs 5 are essentially rectangular and extend at a certain angle outwardly over a relatively short distance from the outer surface of the retaining body member 1. The respective free ends 5e of the check tabs 5 are directed towards the support projections 4 so as to define another plane transverse to the retaining body member 1. In this example of embodiment of the retaining body member 1, the check tabs 5 are arranged facing the support projections 4.

Figures 2, 3, 4 and 7 show how the retaining lugs 6 extend radially over a relatively short distance from the inner surface of the retaining body member 1 and define a theoretical transverse plane coincident with the theoretical transverse plane formed by the support projections 4, and the narrowing 7 which is dimensioned so that the steel cable 8 of the sheathed cable 3, without the sheath 9 thereof, may slide therethrough, as shown in Figure 2.

The retaining body member 1, the support projections 4 and the retaining lugs 6 are adjacent and are superimposed on each other in such a way as to define, as said above, a single transverse plane to the retaining body member 1.

Figures 1 and 2 show how the support projections 4 and the check tabs 5 define in the intermediate portion of the retaining body member 1 a housing AL where, once the terminal of the invention is mounted in the partition 2 through the through hole 10 provided therefor, the partition 2 is snugly lodged.

For the same reasons as given above, the means for adjusting and permanently setting the length of the sheathed steel cable 3 between the retaining body member 1 and the corresponding brake mechanism have not been shown in the drawing figures.

Figure 2 shows how the steel cable 8, through the narrowing 7 defined by the retaining lugs 6 of the retaining body member 1, passes through the partition 2 defining the vehicle passenger compartment through the narrowing 7, so that it may slide freely in both directions moved by the handbrake lever to which it is connected.

Figure 2 shows how the corresponding end of the sheath 9 of the steel cable 8 presses against the retaining lugs 6 by way of the said setting and adjusting means for the length of the sheathed steel cable 3. In this way, the lugs 6 act as stops preventing the sheath 9 from passing through the retaining body member 1 at the same time as they set the position occupied by said end of the sheath 9. Obviously, the retaining lugs 6 are arranged at a sufficient distance from the associated end of the retaining body member 1, so that the portion of the sheath 9 contained in the retaining body member 1 may not come out of it in untimely fashion, under normal conditions of use.

It is extremely simple to assemble the cable sheath terminal for motor vehicles of the invention in the partition 2 defining the vehicle passenger compartment, as shown in Figures 1 and 2 and requires no tools. Said assembly consists simply of inserting the retaining body member 1, by the end provided with the check tabs 5 from the outside of the passenger compartment into the passenger compartment through the through hole 10, formed in the partition 2, to the precise depth for the partition 2 to be held between the support projections 4 and the ends 5e of the check tabs 5. In this way, the double resilient deformation of the check tabs 5, i.e. while passing through the hole 10 and after said lugs 5 project out on the inside of the passenger compartment, prevents the retaining body member 1 from coming out of the partition 2. The sizing of the housing AL defined between the support projections 4 and the check tabs 5 is such that the partition 2 is compressed between the support projections 4 and the check tabs 5 so that, under normal conditions of use, i.e.under conditions of the normal vibrations caused when the vehicle is running, the retaining body member 1 cannot come loose from the partition 2. At the same time, the pressure of the check tabs 5 on the partition 2 prevents noise from being generated.

Once the terminal of the invention has been mounted in the partition 2 as described above, the terminal is ready to allow the passage through the narrowing 7 of the retaining body member 1 of the steel cable 8 connecting, as said above, the handbrake lever with the corresponding brake mechanism and, at the same time, retain the corresponding end of the sheath 9 of the sheathed steel cable 3 by the action of the retaining lugs 6 disposed inside the retaining body member 1 which also set the position occupied by said end of the sheath 9.

## Claims

1. A cable sheath terminal for motor vehicles comprising a basically cylindrical retaining body member (1) formed by:
- externally, a plurality of support projections (4) of relatively low height and which are evenly spaced apart, defining a theoretical transverse plane, and a plurality of check tabs (5), arranged in such a way as to be facing said support projections (4) and which are of relatively low height and are slightly inclined in such a way that the respective free ends thereof (5e) are directed towards said support projections (4), defining another theoretical transverse plane;
- and, internally, a plurality of retaining lugs (6) defining a theoretical transverse plane and a narrowing (7) through which the steel cable (8), devoid of the sheath (9), may be slid, said retaining lugs (6) acting as stop members to prevent the sheath (9) of the steel cable (8) from crossing through the whole of the interior of the retaining body member (1);
said retaining body member (1) being a one-piece member and said support projections (4) and check tabs (5) defining, at an intermediate portion of the retaining body member (1), a housing (AL) dimensioned in such a way that, once the retaining body member (1) is engaged in a corresponding partition (2) through a through hole (10) formed therein for that purpose, by resilient deformation of the check tabs (5), the said partition (2) is compressed between the support projections (4) and the check tabs (5); characterized in that the theoretical transverse plane defined by the plurality of retaining lugs (6) is coincident with the theoretical transverse plane formed by the support projections (4).

## Patentansprüche

1. Seilzugmantelendstück für Motorfahrzeuge, das ein im wesentlichen zylinderförmiges Haltekörperteil (1) umfaßt, das wie folgt ausgebildet ist:
- außenseitig mit einer Anzahl von Haltefortsätzen (4) von vergleichsweise geringer Höhe und die gleichmäßig beabstandet sind, wodurch eine theoretische Transversalebene festgelegt wird, und mit einer Anzahl von Sperrzungen (5), die in einer solchen Art und Weise angeordnet sind, daß sie den Haltefortsätzen (4) zugewandt sind, und die von vergleichsweise niedriger Höhe sind und in einer solchen Art und Weise leicht geneigt sind, daß ihre jeweiligen freien Enden (5e) zu den Haltefortsätzen (4) hin gerichtet sind, wodurch eine andere theoretische Transversalebene festgelegt wird;
- und innenseitig mit einer Anzahl von Haltenasen (6), die eine theoretische Transversalebene festlegen, sowie mit einer Einschnürung bzw. Engstelle (7), durch die man den Stahlseilzug (8) ohne den Mantel (9) gleiten lassen kann, wobei die Haltenasen (6) als Stopp- bzw. Anschlagteile dienen, um zu verhindern, daß sich der Mantel (9) des Stahlseilzugs (8) durch das gesamte Innere des Haltekörperteils (1) erstreckt;
- wobei das Haltekörperteil (1) ein einstückiges Teil ist und die Haltefortsätze (4) und die Sperrzungen (5), an einem Mittelabschnitt des Haltekörperteils (1), ein Gehäuse (AL) festlegen, das so dimensioniert ist, daß, sobald das Haltekörperteil (1) in eine entsprechende Trennwand (2) durch ein darin zu diesem Zweck ausgebildetes Durchgangsloch (10) eingreift, die genannte Trennwand (2) durch elastische Verformung der Sperrzungen (5) zwischen die Haltefortsätze (4) und die Sperrzungen (5) gedrückt wird;
**dadurch gekennzeichnet,** daß
die theoretische Transversalebene, die durch die Anzahl von Haltenasen (6) festgelegt wird, mit der theoretischen Transversalebene zusammenfällt, die durch die Haltefortsätze (4) gebildet wird.

## Revendications

1. Borne de gaine de câble pour véhicules à moteur comprenant un élément formant corps de retenue (1) pratiquement cylindrique formé par :
- à l'extérieur, une pluralité de saillies de support (4) d'une hauteur relativement faible et qui sont écartées de façon égale, définissant un plan transversal théorique, et une pluralité de pattes de blocage (5), disposées de manière à faire face auxdites saillies de support (4) et qui sont d'une hauteur relativement faible, ainsi que légèrement inclinées de sorte que leurs extrémités libres respectives (5e) sont dirigées vers lesdites saillies de support (4), définissant un autre plan transversal théorique ;
- et, à l'intérieur, une pluralité de talons de retenue (6) définissant un plan transversal théorique et un rétrécissement (7) à travers lequel le câble en acier (8), dépourvu de gaine (9), peut être glissé, lesdits talons de retenue (6) agissant comme des éléments d'arrêt de façon à empêcher la gaine (9) du câble en acier (8) de traverser tout l'intérieur de l'élément formant corps de retenue (1) ;
ledit élément formant corps de retenue (1) étant un élément d'un seul tenant et lesdites saillies de support (4) et pattes de blocage (5) définissant, au niveau d'une partie intermédiaire de l'élément formant corps de retenue (1), un logement (AL) dimensionné de telle manière que, une fois que l'élément formant corps de retenue (1) est engagé dans une paroi de séparation (2) correspondante à travers un trou traversant (10) qui y est formé à cet effet, par déformation élastique des pattes de blocage (5), ladite paroi de séparation (2) est comprimée entre les saillies de support (4) et les pattes de blocage (5) ; caractérisée en ce que le plan transversal théorique défini par la pluralité de talons de retenue (6) coïncide avec le plan transversal théorique formé par les saillies de support (4).
